Europäisches Patentamt

European Patent Office

Office européen des brevets

(11) Veröffentlichungsnummer: **0 210 287**
**B1**

(12) **EUROPÄISCHE PATENTSCHRIFT**

(45) Veröffentlichungstag der Patentschrift:
**18.05.88**

(21) Anmeldenummer: **85109087.8**

(22) Anmeldetag: **20.07.85**

(51) Int. Cl.⁴: **F 16 K  15/16,** F 04 B  39/10

(54) Plattenventil mit mittig ansetzenden Lenkarmen.

(43) Veröffentlichungstag der Anmeldung:
**04.02.87 Patentblatt 87/6**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
**EP-A-0 108 997**

(73) Patentinhaber: **DIENES WERKE FÜR
MASCHINENTEILE GMBH & CO KG, Kölner
Strasse 7, D-5063 Overath 1 (DE)**

(72) Erfinder: **Lüdenbach, Karl, Unterschelmerath 40,
D-5250 Engelskirchen (DE)**

(74) Vertreter: **Weinkauff, Wolfgang, Fuchshohl 71,
D-6000 Frankfurt 50 (DE)**

EP 0 210 287 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem aus der EP-A-108 997 bekannten, konzentrischen Plattenventil, dessen Ventilplatte über ihr im Stegbereich radial mittig anwachsende in Umfangsrichtung verteilte bogenförmige Lenker reibundsfrei geführt und eingespannt ist zwischen Sitz- und Fängerplatten.

Solche Ventile haben den Vorteil, daß die zwischen verhältnismäßig langen Lenkern mittig ausbalancierte Ventilplatte im Betrieb weich und verkantungsfrei geführt ist, und bei kleinem Schadraum metallisch präzise gegen den Sitz abdichtet, wobei, bezogen auf den Einbauquerschnitt, ein verhältnismäßig großer wirksamer Öffnungsquerschnitt zur Verfügung steht.

Alle diese Gattungsmerkmale tragen bei zu einer Vergrößerung der Förderleistung, verglichen mit einem gleichgroßen, dafür allerdings weniger aufwendig herzustellenden Lamellenventil.

Erfindungsaufgabe ist es dem gegenüber, ein gattungsgemäßes Plattenventil so auszugestalten, daß es, wie ein Lamellenventil, im wesentlichen aus wenigen einfachen Stanzteilen besteht, aber trotzdem eine mindestens ebensogroße Förderleistung ermöglicht wie ein bekanntes Plattenventil.

Die Aufgabe wird gelöst durch die Merkmalskombination des Hauptanspruches. Der mittige geschlossene Ventilplattenring trennt mit den über und unter ihm angeordneten Dichringen, welche zugleich den Hub bestimmen, Druckventilbereich und Saugventilbereich, so daß mit einer einzigen parallel zu sich selbst reibungsfrei geführten Ventilplatte beide für die Funktion einer zugehörigen Kolbenmaschine erforderlichen Steuerfunktion bewältigt werden. Weil die alle Ventilteile durchsetzenlen Spannbolzen in den Stegbereichen des mittig geschlossenen Ventilplattenringes angeordnet sind, ergibt sich eine Vergrößerung der Steifigkeit und Verbesserung des Dichtungsschlusses, verglichen mit bekannten Plattenventilen, die durch einen Zentralbolzen mit Hubbeilagen verspannt sind, so daß im Zentrum der Ventilplatte keine Durchlaßöffnungen vorhanden sein können. Die steifere Verspannung aller Ventilplattenteile ermöglicht es, daß Sitz und Fänger aus verhältnismäßig dünnem Material einfach gestanzt werden können. Dadurch vermindert sich beim Einbau zwischen Zylinder und Zylinderkopf einer Kolbenmaschine der Totraum, was eine nochmalige Vergrößerung der Förderleistung bedeutet. Eine gewünschte Federcharakteristik kann in bekannter Weise durch entsprechend hohe bleibende Vorbiegungen der Lenker eingestellt werden, individuell für den Saugbereich und den Druckbereich. Sitz, Fänger und die Ventilplatte, das einzige bewegliche Ventilelement, können, wie auch die Dichtringe, aus dünnem Plattenmaterial gestanzt werden, ohne jede weitere Bearbeitung. Das Stanzwerkzeug kann zugleich die bleibende Lenkervorbiegung erzielen. Auf einen lagerichtigen Einbau der Ventilplatte muß der Monteur nicht achten.

Die Lenker für den Druck- und Saugbereich verlaufen konzentrisch beiderseits des mittigen geschlossenen Ventilplattenringes, so daß dort keine Durchlaßschlitze für das Fluid vorgesehen sein können. Zur Vergrößerung der Förlerleistung sollten also die Lenkarme beiderseits am geschlossenen Ventilring mit einem möglichst kleinen durch Laserschneilen erreichbaren Spalt von etwa 0,2 mm anschließen. Dann ist aber eine nennenswerte Dauerbrüche verhindernde Ausrundung der Lenkeranschnitte an den gemeinsamen Wurzeln nicht möglich. Um trotzdem das Ventil auch bei hoher Hubfrequenz und entsprechend großer Förlerleistung zuverlässig und dauerhaft betreiben zu können, sind in Weiterbildung der Erfindung die Anschnitte an jeder gemeinsamen Wurzel zwischen den Dichtringen eingespannt.

Die Erfindung möge anhand der in den Figuren dargestellten Ausführungsbeispiele weiter erläutert werden. Es zeigen:

Fig. 1 eine Draufsicht auf eine Ventilplatte,

Fig. 2 eine Seitenansicht dazu,

Fig. 3 einen Schnitt in der Ebene III/III aus Fig. 1,

Fig. 4 eine Oberansicht und

Fig. 5 eine Unteransicht je auf ein halbes Ventil, wobei der Schnitt jeweils so gelegt ist, daß man die Ventilplatte und die daraufliegende strichpunktierte Dichtung sehen kann,

Fig. 6 eine Seitenansicht entsprechend Fig. 2 auf eine geänderte Ventilplatte und

Fig. 7 eine Draufsicht zu Fig. 6.

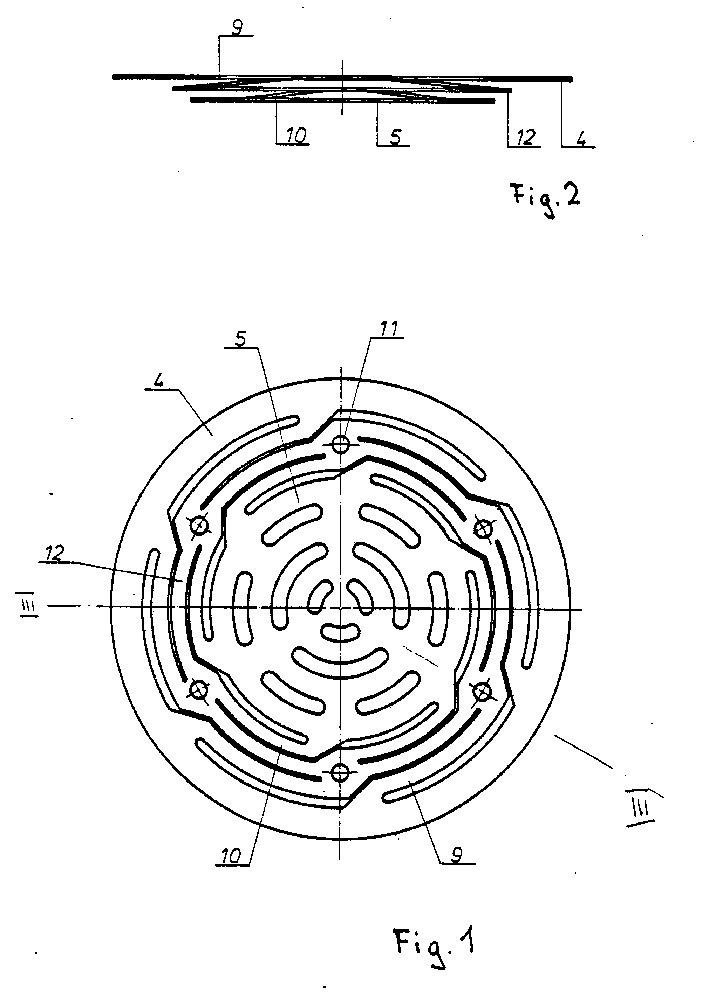

Die Ventilplatte nach den Figuren 1 bis 5 hat einen radial ungefähr mittig und geschlossen verlaufenden schmalen Ring 12, welcher im eingebauten Ventil (Figuren 3 bis 5) den innerhalb des Ringes gelegenen Saugbereich vom außerhalb angeordneten Druckbereich trennt. Über und unter dem geschlossenen durchlaufenden mittigen Ring 12 ist je mindestens ein kongruenter Dichtring 6 bzw. 7 angeordnet (Fig. 3), und das so zusammen mit den äußeren Dichtringen 8 zwischen Sitz 1 und Fänger 2 gebildete Paket ist durch im Umfangsbereich des geschlossenen Ringes 12 verteilte Schrauben 11 stabil und gut dichtend verspannt. Eine zusätzliche Verspannung erfolgt in der aus Fig. 3 ersichtlichen Einbausituation zwischen Zylinder (unten) und Zylinderkopf (oben).

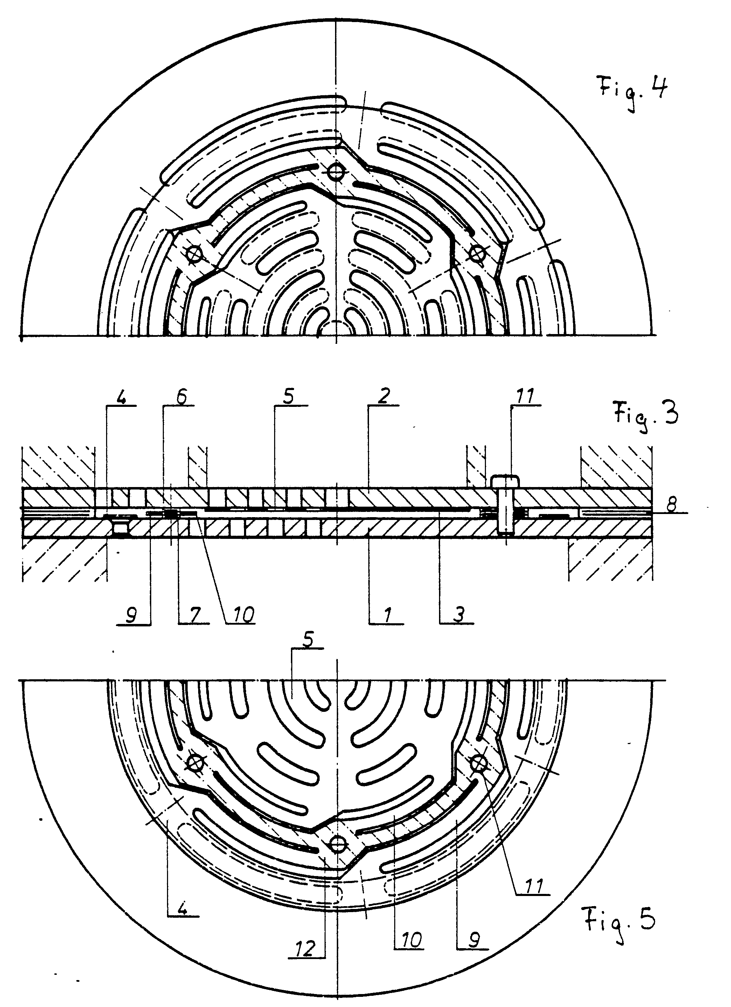

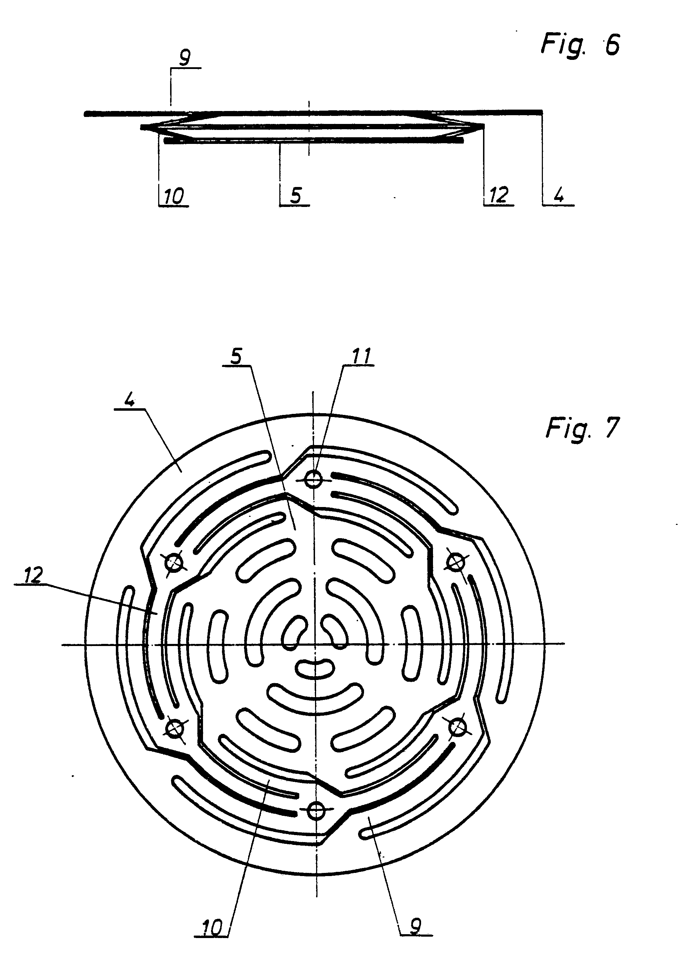

Zwischen dem Druckventilplattenteil 4 der Ventilplatte und ihrem mittigen geschlossenen schmalen Ring 12 verlaufen bogenförmige äußere Lenker 9 und nach innen von je einer mit je einem äußeren Lenker gemeinsamen Wurzel im Stegbereich angeschnittene Lenker 10 zu Stegen 3 für den innerhalb des geschlossenen Ringes 12 liegenden Saugbereich der gemeinsamen einstückigen Ventilplatte. Die Lenker 9 und 10 sind mit individuellen Pfeilhöhen bleibend vorgebogen, wie Fig. 6 erkennen läßt. Die schmalen Anschnitte der Lenker an den gemeinsamen Wurzeln im Stegbereich sind dort so eingespannt, daß die Anschnitte überdeckt werden, wie am besten aus Figuren 4 und 5 zu sehen ist.

In der gemeinsamen Ventilplatte sind der Druckventilplattenteil mit 4 und der Saugventilplattenteil mit 5 bezeichnet.

Bei diesem Ausführungsbeispiel verlaufen von je einem gemeinsamen Anschnitt im schmalen mittigen geschlossenen Ventilring die inneren und äußeren Lenker 10 bzw. 9 gegensinnig, im sonst gleichen Ausführungsbeispiel nach Figuren 6 und 7 gleichsinnig.

## Patentansprüche

1. Konzentrisches Plattenventil, dessen Ventilplatte über ihr im Stegbereich radialmittig anwachsende in Umfangsrichtung verteilte und von einer Wurzel ausgehende bogenförmige Lenker (9, 10) reibungsfrei geführt und über Spannbolzen (11) eingespannt ist zwischen Sitz- und Fängerplatte (1, 2), wobei die Lage der Spannbolzen der Lage der Lenker zugeordnet ist, dadurch gekennzeichnet, daß die Ventilplatte einen radial ungefähr mittig und geschlossen verlaufenden Ring (12) aufweist, von dem äußere und innere Lenker (9, 10) von einer gemeinsamen Wurzel über Anschnitte ausgehen, wobei die inneren Lenker (10) radial nach innen zu einem Saugventilplattenteil (5) und die äußeren Lenker (9) radial nach außen zu einem Druckventilplattenteil (4) führen, wobei über und unter dem geschlossen verlaufenden Ring kongruent je mindestens ein Dichtring (6, 7) liegt und wobei die Dichtringe, der geschlossen verlaufende Ring (12) und Sitz-und Fängerplatte (1, 2) von Spannbolzen 11 durchsetzt sind.

2. Plattenventil nach Anspruch 1, dadurch gekennzeichnet, daß die Anschnitte an jeder gemeinsamen Wurzel zwischen den Dichtringen (6, 7) eingespannt und von diesen überdeckt sind.

## Claims

1. Concentric plate valve, the valve plate of which is frictionlessly conducted over its arcuate guides (9, 10), distributed in circumferential direction, increasing radially centrally in the land region and starting from a root, and is clamped via clamping bolts (11) between seat and catcher plates (1, 2), the position of the clamping bolts being assigned to the position of the guides, characterized in that the valve plate has a radially approximately central and uninterruptedly running ring (12), from which outer and inner guides (9, 10) run out from a common root via junctions, the inner guides (10) leading radially inwards to a suction-valve plate part (5) and the outer guides (9) running radially outwards to a pressure-valve plate part (4), at least one sealing ring (6, 7) lying congruently in one case above and in the other case below the uninterruptedly running ring, and clamping bolts 11 passing through the sealing rings, the uninterruptedly running ring (12) and seat and catcher plates (1, 2).

2. Plate valve according to Claim 1, characterized in that the junctions are clamped at each common root between the sealing rings (6, 7) and are covered by the latter.

## Revendications

1. Clapet à plaques concentrique dont la plaque clapet est guidée sans frottement, au moyen de lames en forme d'arcs réparties dans le sens de la périphérie et s'étendant concentriquement, découpées dans la pièce elle-même, et bridées entre deux plaques sièges et butées de limitation de la coures caractérisées par le fait que lesdites lames de guidage sont découpées par groupes de deux (10, 9) à partir d'un point d'enracinement commun, de part et d'autre d'un cercle médian farmé (12) vers l'intérieur de cellui-ci jusqu'à une partie formant clapet d'aspiration (5) et vers l'extérieur jusqu'à une partie formant clapet de refoulement (4), qu'un anneau d'étanchéité au moins (6, 7) est disposé serré au-dessus et en dessous dudit cercle médian (12) et que toutes les parties énumérés ci-dessus sont traversées par des boulons de serrage (11) dans les zones de séparation.

2. Clapet à plaques selon la revendication 1 caractérisé par le fait que les zones d'enracinement communes sont bridées entre les anneaux d'étanchéité (6, 7) et recouvertes par lesdits anneaux.

9

10    5    12    4

**Fig. 2**

5    11

4

12

III    III

10    9

**Fig. 1**

Fig. 4

Fig. 3

Fig. 5

*Fig. 6*

*Fig. 7*